# EUROPEAN PATENT APPLICATION

(11) **EP 3 133 482 A1**
(43) Date of publication of application: **22.02.2017**
(21) Application number: 16160168.7
(22) Date of filing: 14.03.2016
(51) Int. Cl.: G06F 3/0488, G06F 21/62, H04M 1/00, G06F 3/0484

(54) **METHOD AND DEVICE FOR DISPLAYING A TARGET OBJECT**

(30) Priority: 19.08.2015 CN 201510512105
(71) Applicant: Xiaomi Inc., Beijing 100085 (CN)
(72) Inventor: CUI, Jianwei, 100085 Haidian District (CN); XIE, Liang, 100085 Haidian District (CN); QIAN, Kai, 100085 Haidian District (CN); CHEN, Dihao, 100085 Haidian District (CN)
(74) Representative: Steinbauer, Florian

(57) **Abstract**

Method and device for displaying a target object are provided in the disclosure. The method may comprise: detecting (201) multi-point touch event for the target object; determining (202) whether the detected multi-point touch event is a first multi-point touch event that is predetermined, wherein the first multi-point touch event is used to trigger switching of the target object to a private displaying mode; if the detected multi-point touch event is the first multi-point touch event, switching (203) the target object to the private displaying mode, such that only the target object is displayed in the private displaying mode.

## Description

### FIELD

The present disclosure generally relates to the field of communication, and more particularly to a method and device for displaying a target object.

### BACKGROUND

The users may deliver their mobile phones to friends nearby when using the mobile phones, for showing some of messages and pictures which on the mobile phones to them. Thus, how to sufficiently ensure users' privacy in this usage scenario having important meaning for improving user experience.

### SUMMARY

In order to solve problems in related prior arts, the disclosure provides a method and device for displaying a target object.

According to a first aspect of the present disclosure, a method for displaying a target object is provided, including: detecting multi-point touch event for the target object; determining whether the detected multi-point touch event is a first multi-point touch event that is predetermined, wherein the first multi-point touch event is used to trigger switching of the target object to a private displaying mode; if the detected multi-point touch event is the first multi-point touch event, switching the target object to the private displaying mode, such that only the target object is displayed in the private displaying mode.

Advantageously, after switching the target object to private displaying mode, the method further includes: detecting multi-point touch event for the target object; determining whether the detected multi-point touch event is a second multi-point touch event that is predetermined, wherein the second multi-point touch event is used to trigger restoring of the target object from the private displaying mode to a default displaying mode; if the detected multi-point touch event is the second multi-point touch event, switching the target object from the private displaying mode to the default displaying mode.

Advantageously, the processing of switching the target object to private displaying mode includes: moving the target object to the predetermined private displaying interface for displaying. The processing of switching the target object from private displaying mode to default displaying mode includes: moving the target object out of the predetermined private displaying interface and closing the predetermined private displaying interface.

Advantageously, the processing of switching the target object to private displaying mode includes: displaying the target object in full-screen and maintaining a lock screen status. The processing of switching the target object from private displaying mode to default displaying mode includes: enabling the target object to exit from full screen displaying and deactivating the lock screen status.

Advantageously, the first multi-point touch event includes a first selecting event and a gesture-zoom-in event for the target object, and a time period during which the first selecting event occurs contains a time period during which the gesture-zoom-in event occurs. The second multi-point touch event including a second selecting event and a gesture-zoom-out event for the target object, and a time period during which the second selecting event occurs contains a time period during which the gesture-zoom-out event occurs.

Advantageously, both the first selected event and the second selected event include long-press event; he gesture-zoom-in event comprises a two-finger-outward-sliding event for any location on a screen; the gesture-zoom-out event comprises a two-finger-inward-sliding event for any location on the screen.

Advantageously, the target object includes image object or text object.

According to a second aspect of embodiments of the present disclosure, a device for displaying a target object is provided, including: a first detecting module is configured to detect multi-point touch event for the target object; a first determining module is configured to determine whether the multi-point touch event detected by the first detecting module is a first multi-point touch event that is predetermined, wherein the first multi-point touch event is used to trigger switching of the target object to a private displaying mode; a first switching module is configured to switch the target object to the private displaying mode if the first determining module determines that the detected multi-point touch event is the first multi-point touch event, such that only the target object is displayed in the private displaying mode.

Advantageously, the device further includes a second detecting module, a second determining module and a second switching module; the second detecting module is configured to detect the multi-point touch event for the target object after the first switching module switches the target object to private displaying mode; the second determining module is configured to determine whether the multi-point touch event detected by the second detecting module is a second multi-point touch event that is predetermined, wherein the second multi-point touch event is used to trigger restoring of the target object from the private displaying mode to a default displaying mode; the second switching module is configured to switch the target object from the private displaying mode to the default displaying mode if the second determining module determines that the detected multi-point touch event is the second multi-point touch event.

Advantageously, the first switching module includes: a first displaying sub-module configured to move the target object to predetermined private displaying interface for displaying. The second switching module includes: a closing sub-module configured to move the target object out of the predetermined private displaying interface and close the predetermined private displaying interface.

Advantageously, the first switching module includes: a second displaying sub-module configured to display the target object in full-screen and maintain a lock screen status. The second switching module includes: an exiting sub-module configured to enable the target object exit from full-screen displaying and deactivate the lock screen status.

Advantageously, the first multi-point touch event detected by the first detecting module includes a first selecting event and a gesture-zoom-in event for the target object, and a time period during which the first selecting event occurs contains a time period during which the gesture-zoom-in event occurs. The second multi-point touch event detected by the second detecting module includes a second selecting event and a gesture-zoom-out event for the target object, and a time period during which the second selecting event occurs contains a time period during which the gesture-zoom-out event occurs.

Advantageously, the first selected event detected by the first detecting module and the second selected event detected by the second detecting module both include long-press event; the gesture-zoom-in event comprises a two-finger-outward-sliding event for any location on a screen; the gesture-zoom-out event comprises a two-finger-inward-sliding event for any location on the screen.

Advantageously, the target object for which the first detecting module and the second detecting module have detected includes image object or text object.

According to a third aspect of embodiments of the present disclosure, a device for displaying a target object including: a processor; a memory for storing the instructions executable by the processor; wherein the processor is configured to: detect a multi-point touch event for the target object; determine whether the detected multi-point touch event is a first multi-point touch event that is predetermined, wherein the first multi-point touch event is used to trigger switching of the target object to a private displaying mode; if the detected multi-point touch event is the first multi-point touch event, switch the target object to the private displaying mode, such that only the target object is displayed in the private displaying mode.

In above embodiments of the present disclosure, a method for displaying the target object is provided by detecting a multi-point touch event for the target object, and determining whether the detected multi-point touch event is a first multi-point touch event that is predetermined, wherein the first multi-point touch event is used to trigger switching of the target object to a private displaying mode, switching the target object to private displaying mode if the detected multi-point touch event is the first multi-point touch event, so that the user can implement the switching of the target object to private displaying mode quickly by simple multi-point touch operations, reducing the potential risk of privacy disclosure exist in usage scenario where user show the target object to other user.

It is to be understood that both the forgoing general descriptions and the following detailed descriptions are exemplary and explanatory only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for displaying target object according to an exemplary embodiment;
Fig. 2 is a flow diagram illustrating another method for displaying target object according to an exemplary embodiment;
Fig. 3 is an interactive diagram illustrating a displaying of message according to an exemplary embodiment;
Fig. 4 is an interactive diagram illustrating another displaying of message according to an exemplary embodiment;
Fig. 5 is an interactive diagram illustrating a displaying of picture according to another exemplary embodiment;
Fig. 6 is an interactive diagram illustrating another displaying of picture according to an exemplary embodiment;
Fig. 7 is a block diagram illustrating a device for displaying the target object according to an exemplary embodiment;
Fig. 8 is a block diagram illustrating another device for displaying the target object according to an exemplary embodiment;
Fig. 9 is a block diagram illustrating another device for displaying the target object according to an exemplary embodiment;
Fig. 10 is a block diagram illustrating another device for displaying the target object according to an exemplary embodiment;
Fig. 11 is a block diagram illustrating another device for displaying the target object according to an exemplary embodiment;
Fig. 12 is a block diagram illustrating another device for displaying the target object according to an exemplary embodiment;
Fig. 13 is a structure diagram illustrating a device for displaying target object according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of device and methods consistent with aspects related to the invention as recited in the appended claims.

The terms used in present disclosure are merely for describing the particular embodiments rather than limiting the present disclosure. Terms, such as "a", "an", "said", and "the", as used in singular form in present disclosure and appended claims include plural form, unless otherwise represent other meaning clearly in the context. It also should be understood that the term "and/or" used herein indicates and comprises any or all of possible combinations of one or more associated items which have been listed.

It should be understood that the terms "first," "second," and "third," may be used to describe various information, but it not limit to these terms. These terms are only used to separate the same type of the information from each other. For example, the first information may also be referred as the second information without departing from the scope of the present disclosure, similarly the second information may also be referred as the first information. The word "if" as used herein may be interpreted as "when" or "while" or "respond to determination" depending on the context.

The users may deliver their mobile phones to friends nearby when using the mobile phones, for showing some of messages and pictures which on the mobile phones to them. On one hand, when showing the messages which on the mobile phones to friends nearby, the undesirable messages will also be shown to them except for the message which expected to be viewed, due to generally there are multiple messages shown on the mobile phone. On the other hand, when showing the pictures which on the mobile phones to friends nearby, the undesirable pictures will also be viewed by sliding forward or backward unintentionally except for the current pictures. That is, in this usage scenario, the way of showing the current messages and pictures may cause privacy disclosure when the other people are not on purpose.

On that account, the present disclosure proposed a method for displaying a target object is provided by detecting multi-point touch event for the target object, and determining whether the detected multi-point touch event is a first multi-point touch event that is predetermined, wherein the first multi-point touch event is used to trigger switching of the target object to a private displaying mode, switching the target object to private displaying mode if the detected multi-point touch event is the first multi-point touch event, so that the user can implement the switching of the target object to private displaying mode quickly by simple multi-point touch operations, reducing the potential risk of privacy disclosure exist in usage scenario where user show the target object to other user.

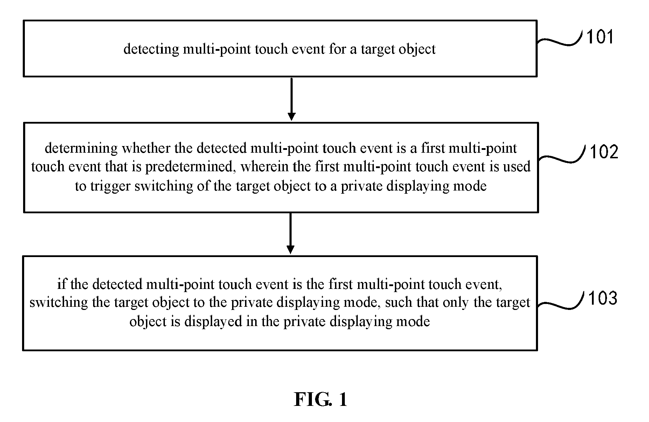

As shown in Fig. 1, illustrating a method for displaying a target object which applied in terminal, according to an exemplary embodiment, including:
In step 101, detecting multi-point touch event for the target object.
In step 102, determining whether the detected multi-point touch event is a first multi-point touch event that is predetermined, wherein the first multi-point touch event is used to trigger switching of the target object to a private displaying mode.
In step 103, if the detected multi-point touch event is the first multi-point touch event, switching the target object to the private displaying mode, such that only the target object is displayed in the private displaying mode.

The terminal mentioned above may be mobile terminal, for example, the terminal may be touch-screen smart phone of the user. The target object mentioned above may be text object or image object, for example, the target object may be the message on the user terminal and may also be the picture on the user terminal. Certainly, the target object may be other type of object such as multimedia object, window object and the like which configured to show the target object other than text object or image object; for example, the target object can also be window of application or multimedia interface on the user terminal.

In this embodiment, the particular multi-touch operations are performed for the target object to be shown when the user show the target object to the other users, and the target object which to be shown is switched to private displaying mode for displaying.

The particular multi-touch operations mentioned above may be the predetermined multi-touch operations; the predetermined multi-touch operations may include the first multi-point touch operation which used to trigger switching of the target object to private displaying mode and the second multi-point touch operation which used to trigger restoring of the target object from private displaying mode to default displaying mode.

Both the first multi-point touch operation and the second multi-point touch operation mentioned above may be the combination of the predetermined touch operation. For example, the first multi-point touch operation may include the selecting operation for the target object and the gesture-zoom-in operation when the selecting operation occurs. The second multi-point touch operation may include the selecting operation for the target object and the gesture-zoom-out operation when the selecting operation occurs.

Wherein, in one implementation illustrated in this embodiment, this selecting operation may be the long-press operation; the gesture-zoom-in operation may be the two-finger-outward-sliding operation for any location on a screen when user select the target object by long-pressing it; the gesture-zoom-out operation may be the two-finger-inward-sliding operation for any location on the screen when user select the target object by long-pressing it.

In following it will describe the gesture interactive process between user and terminal in details with the selecting operation as the long-press operation, the gesture-zoom-in operation as the two-finger-outward-sliding operation and the gesture-zoom-out operation as the two-finger-inward-sliding operation for example.

In this embodiment, the user may select the target object by long-pressing it with one hand when the user show the target object which on the terminal to the other users, the user may perform the two-finger-outward-sliding operation for any location on screen with another hand when the user long-press the target object, to trigger the switching of the target object to private displaying mode, such that the target object only displayed in the private displaying mode.

At same time, the terminal may detect the multi-point touch event for the target object in the background in real-time, and determine whether the detected multi-point touch event is the first multi-point touch event corresponding to the first multi-point touch operation; when the long-press event for the target object by the user is detected, and after the two-finger-outward-sliding event for any location on screen is detected within the time period during which the long-press event occurs, the terminal can determine the detected multi-point touch event is the first multi-point touch event corresponding to the first multi-point touch operation.

When the terminal has determined the detected multi-point touch event is the first multi-point touch event, the switching of the target object to private displaying mode that may be triggered , such that only the target object displayed in the private displaying mode.

Wherein, it can be implemented in deferent ways for switching the target object to the private displaying mode.

In an exemplary implementation, it may display the target object in full-screen and maintain a lock screen status when the target object is switched to the private displaying mode. The terminal may not response to the touch operation such as click, slide UDRL (up, down, right, left) and the like for the target object by the user anymore when it is maintained in lock screen status, so that it can reduce the potential risk of privacy disclosure exist during which user show the target object to other user.

After showing the target object to other users is done, the user may also select the target object by long-pressing it with one hand, the user may perform the two-finger-inward-sliding operation for any location on screen with another hand when long-pressing the target object, to trigger the switching of the target object from private displaying mode to default displaying mode.

At same time, the terminal may still detect the multi-point touch event for the target object in the background in real-time, and determine whether the detected multi-point touch event is the second multi-point touch event corresponding to the second multi-point touch operation, after the two-finger-inward-sliding event for any location on screen is detected within the time period during which the long-press event occurs, the terminal can determine the detected multi-point touch event is the second multi-point touch event corresponding to the second multi-point touch operation.

When the terminal has determined the detected multi-point touch event is the second multi-point touch event, the switching of the target object from private displaying mode to default displaying mode that may be triggered, the target object is exited from full-screen displaying and the terminal is deactivated the lock screen status. After deactivating the lock-screen status, the terminal may response to the touch operation such as click, slide UDRL (up, down, right, left) and the like for the target object by the user regularly.

For example, assuming the target object is the message on the user terminal, the user may long-press the message when he/she wants to show the message which on the terminal to the other users, and the user may perform the two-finger-outward-sliding operation with another hand for the message when long-pressing it, to switch the message to private displaying mode, the message is displayed in full-screen and the terminal is maintained in lock screen status, at this time the terminal may not response to the touch operation such as click, slide UDRL (up, down, right, left) and the like for the message by other users anymore. Thus other users cannot view the other messages from the same message session, so that it may reduce the risk of privacy disclosure. After showing the message to other users is done, the user may long-press the message, and perform the two-finger-inward-sliding operation with another hand for the message when long-pressing it, to switch the message to default displaying mode, the message is exited from full-screen displaying and the terminal is deactivated from the lock screen status. After deactivating the lock screen status, the terminal may response to the touch operation such as click, slide UDRL (up, down, right, left) and the like for the message by user regularly.

For another example, assuming the target object is the picture on the user terminal, the user may long-press the picture when he/she wants to show the message which on the terminal to the other users, and the user may perform the two-finger-outward-sliding operation with another hand for the picture when long-pressing it, to switch the picture to private displaying mode, the picture is displayed in full-screen and the terminal is maintained in lock screen status, at this time the terminal may not response to the touch operation such as click, slide UDRL (up, down, right, left) and the like for the picture by other users anymore. Thus other users cannot view the other pictures which are undesired to show by sliding left or right when they view the picture, so that it may reduce the risk of privacy disclosure. After showing the picture to other users is done, the user may long-press the message, and perform the two-finger-inward-sliding with another hand for the picture when long-pressing it, to switch the picture to default displaying mode, the picture is exited from full-screen displaying and the terminal is deactivated from the lock screen status. After deactivating the lock screen status, the terminal may response to the touch operation such as click, slide UDRL (up, down, right, left) and the like for the picture by the user regularly.

In another exemplary implementation, it can pre-create a private displaying interface when the target object is switched to private displaying mode, then the target object is moved to the private displaying interface for displaying. Wherein the target object can be full-screen or zoom-in displayed by default when the target object is moved to the private displaying interface.

After the target object is moved to the private displaying interface, the terminal can still response to the touch operation for the target object by user, the user can still perform the two-finger-outward-sliding or two-finger-inward-sliding operation for the target object to do the zoom-in or zoom-out operations. Moreover, due to the private displaying interface is only used to display the target object, the user can not view the other target object except for this target object when perform the slide UDRL operations for this target object, so that it can reduce the potential risk of privacy disclosure exist during that user show the target object to other user.

After showing the target object to other users is done, the user may also select the target object by long-pressing it, the user may perform the two-finger-inward-sliding operation for any location on screen with another hand when long-pressing the target object, to trigger the switching of the target object from private displaying mode to default displaying mode.

At same time, the terminal may still detect the multi-point touch event for the target object in the background in real-time, and determine whether the detected multi-point touch event is the second multi-point touch event corresponding to the second multi-point touch operation, after the two-finger-inward-sliding event for any location on screen is detected within the time period during which the long-press event occurs, the terminal can determine the detected multi-point touch event is the second multi-point touch event corresponding to the second multi-point touch operation.

When the terminal has determined the detected multi-point touch event is the second multi-point touch event, the switching of the target object from private displaying mode to default displaying mode that may be triggered, the target object is moved out of the private interface and the private interface is closed. After the private interface is closed, the terminal can move the target object to the default location.

For example, assuming the target object is the message on the user terminal, the user may long-press the message when he/she wants to show the message which on the terminal to the other users, and the user may perform the two-finger-outward-sliding operation with another hand for the message when long-pressing it, to move the message to the pre-created private displaying interface for displaying, at this time the terminal can response to the touch operation such as click, slide UDRL (up, down, right, left) and the like for the message by other users regularly. Other users cannot view the other messages from the same message session due to the private displaying interface is only used to display the message, so that it may reduce the risk of privacy disclosure.

After showing the message to other users is done, the user may long-press the message, and perform the two-finger-inward-sliding operation with another hand for the message when long-pressing it, to switch the message to default displaying mode, the message is moved out of the private displaying interface and the private displaying interface is closed. After the private interface is closed, the terminal can move the message to the default location in message session.

For another example, assuming the target object is the picture on the user terminal, the user may long-press the picture when he/she wants to show the message which on the terminal to the other users, and the user may perform the two-finger-outward-sliding operation with another hand for the picture when long-pressing it, to move the picture to the pre-created private displaying interface for displaying, at this time the terminal can response to the touch operation such as click, slide UDRL (up, down, right, left) and the like for the message by other users regularly.. Other users cannot view the other pictures which are undesired to show by sliding left or right when they view the picture due to the private displaying interface is only used to display the picture, so that it may reduce the risk of privacy disclosure.

After showing the picture to other users is done, the user may long-press the message, and perform the two-finger-inward-sliding operation with another hand for the picture when long-pressing it, to switch the picture to default displaying mode, the picture is moved out of the private displaying interface and the private displaying interface is closed. After the private interface is closed, the terminal can move the picture to the default location in photo album.

Above describing the gesture interactive process between user and terminal in details with the selecting operation as the long-press operation, the gesture-zoom-in operation as the two-finger-outward-sliding operation and the gesture-zoom-out operation as the two-finger-inward-sliding operation for example. Certainly, the gesture-zoom-in operation can be defined as other types of gesture operation in practical applications, it will not be limited in present embodiment specially.

For example, the gesture-zoom-in operation may also be the slide operation in any first direction for screen or double click for any location on screen when user select the target object by long-pressing it, that is the user can switch the target object to the private displaying mode by sliding in any first direction for screen or double click the target object when user select the target object by long-pressing it; the gesture-zoom-out operation may also be the slide operation in any second direction for screen or double click for any location on screen when user select the target object by long-pressing it, that is after the target object is switched to the private displaying mode, the user can switch the target object from the private displaying mode to default displaying mode by sliding in any second direction for screen or double click the target object. Wherein the first direction and the second direction corresponding to the deferent directions for the screen respectively; for example, the first direction towards left and the second direction towards right.

In above embodiments, with detecting multi-point touch event for a target object, and determining whether the detected multi-point touch event is a first multi-point touch event that is predetermined, wherein the first multi-point touch event is used to trigger switching of the target object to a private displaying mode, switching the target object to private displaying mode if the detected multi-point touch event is the first multi-point touch event, to display only the target object in the private displaying mode , so that the user can implement the switching of the target object to the private displaying mode quickly by simple multi-point touch operations, reducing the potential risk of privacy disclosure exist in usage scenario where user show the target object to other user.

Also, using the multi-point operation to trigger the switching of the target object to the private displaying mode may not only simple to operate but also can avoid the problems of semantic conflict may occur when trigger the switching of the target object to the private displaying mode by conventional single-point operation. For example, the conventional single-point operations such as click, double-click, long-press operation and the like are generally defined with particular semantics in terminal system, thus there may be semantic conflicts with the existing semantics in terminal system when trigger the switching of the target object to the private displaying mode by conventional single-point operation.

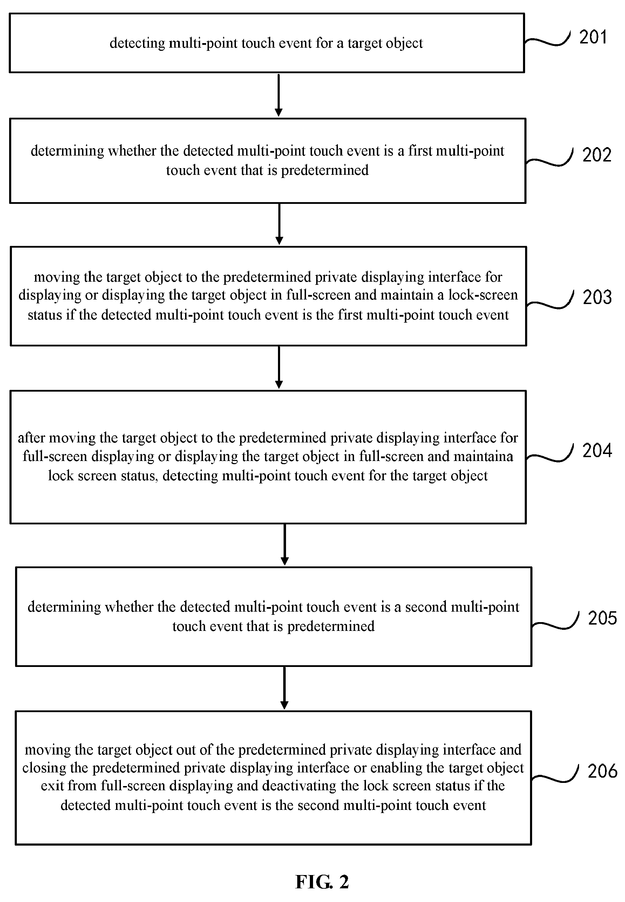

As shown in Fig. 2, illustrating a method for displaying target object which applied in terminal, according to an exemplary embodiment, including:
In step 201, detecting multi-point touch event for a target object;
In step 202, determining whether the detected multi-point touch event is the first multi-point touch event that is predetermined;
In step 203, moving the target object to the predetermined private displaying interface for displaying or displaying the target object in full-screen and maintain a lock screen status if the detected multi-point touch event is the first multi-point touch event;
In step 204, after moving the target object to the predetermined private displaying interface for full-screen displaying or displaying the target object in full-screen and maintain a lock screen status, detecting multi-point touch event for the target object;
In step 205, determining whether the detected multi-point touch event is the second multi-point touch event that is predetermined;
In step 206, moving the target object out of the predetermined private displaying interface and closing the predetermined private displaying interface or enabling the target object to exit from full-screen displaying and deactivating the lock screen status if the detected multi-point touch event is the second multi-point touch event.

The terminal mentioned above may be mobile terminal, for example, the terminal may be touch-screen smart phone of the user. The target object mentioned above may be text object or image object, for example, the target object may be the message on the user terminal and may also be the picture on the user terminal. Certainly, the target object may be other type of object such as multimedia object, window object and the like which used to show the target object other than text object or image object; for example, the target object can also be window of application or multimedia interface on the user terminal.

In this embodiment, the particular multi-touch operations are performed for the target object to be shown when the user show the target object to the other users, and the target object which to be shown is switched to private displaying mode for displaying.

The particular multi-touch operations mentioned above may be the predetermined multi-touch operations; the predetermined multi-touch operations may include the first multi-point touch operation which used to trigger the switching of the target object to private displaying mode and the second multi-point touch operation which used to trigger the restoring of the target object from private displaying mode to default displaying mode.

Both the first multi-point touch operation and the second multi-point touch operation mentioned above may be the combination of the predetermined touch operation. For example, the first multi-point touch operation may include the selecting operation for the target object and the gesture-zoom-in operation when the selecting operation occurs. The second multi-point touch operation may include the selecting operation for the target object and the gesture-zoom-out operation when the selecting operation occurs.

Wherein, in one implementation illustrated in this embodiment, this selecting operation may be the long-press operation; the gesture-zoom-in operation may be the two-finger-outward-sliding operation for any location on screen when user select the target object by long-pressing it; the gesture-zoom-out operation may be the two-finger-inward-sliding operation for any location on screen when user select the target object by long-pressing it.

In following it will describe the gesture interactive process between user and terminal in details with the selecting operation as the long-press operation, the gesture-zoom-in operation as the two-finger-outward-sliding operation and the gesture-zoom-out operation as the two-finger-inward-sliding operation for example.

In this embodiment, the user may select the target object by long-pressing it with one hand when the user show the target object which on the terminal to the other users, the user may perform the two-finger-outward-sliding operation for any location on screen with another hand when the user long-press the target object, to trigger the switching of the target object to private displaying mode, such that the target object only displayed in the private displaying mode.

At same time, the terminal may detect the multi-point touch event for the target object in the background in real-time, and determine whether the detected multi-point touch event is the first multi-point touch event corresponding to the first multi-point touch operation; when the long-press event for the target object by the user is detected, and after the two-finger-outward-sliding event for any location on screen is detected within the time period during which the long-press event occurs, the terminal can determine the detected multi-point touch event is the first multi-point touch event corresponding to the first multi-point touch operation.

When the terminal has determined the detected multi-point touch event is the first multi-point touch event, the switching of the target object to private displaying mode that may be triggered , such that the target object only displayed in the private displaying mode.

Wherein, it can be implemented in deferent ways for switching the target object to the private displaying mode.

In an exemplary implementation, it may display the target object in full-screen and maintain a lock screen status when the target object is switched to the private displaying mode. The terminal may not response to the touch operation such as click, slide UDRL (up, down, right, left) and the like for the target object by the user anymore when it is maintained in lock screen status, so that it can reduce the potential risk of privacy disclosure exist during that user show the target object to other user.

After showing the target object to other users is done, the user may also select the target object by long-pressing it with one hand, the user may perform the two-finger-inward-sliding operation for any location on screen with another hand when long-pressing the target object, to trigger the switching of the target object from private displaying mode to default displaying mode.

At same time, the terminal may still detect the multi-point touch event for the target object in the background in real-time, and determine whether the detected multi-point touch event is the second multi-point touch event corresponding to the second multi-point touch operation, after the two-finger-inward-sliding event for any location on screen is detected within the time period during which the long-press event occurs, the terminal can determine the detected multi-point touch event is the second multi-point touch event corresponding to the second multi-point touch operation.

When the terminal has determined the detected multi-point touch event is the second multi-point touch event, the switching of the target object from private displaying mode to default displaying mode that may be triggered, the target object is exited from full-screen displaying and the terminal is deactivated from the lock screen status. After deactivating the lock screen status, the terminal may response to the touch operation such as click, slide UDRL (up, down, right, left) and the like for the target object by the user regularly.

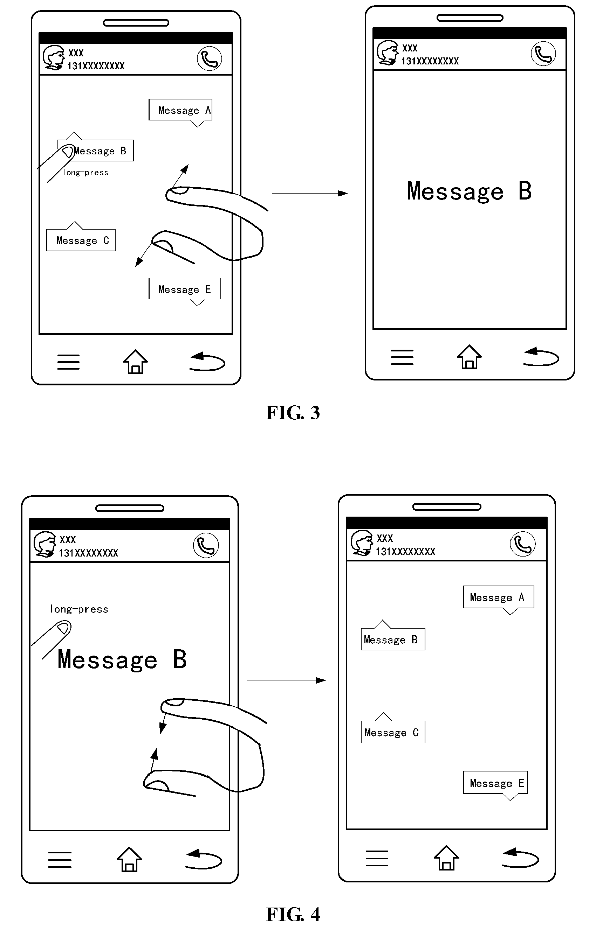

Refer to Fig.3, for example, assuming the target object is the message on the user terminal, the user may long-press the message when he/she wants to show the message which on the terminal to the other users, and the user may perform the two-finger-outward-sliding operation with another hand for the message when long-pressing it, to switch the message to private displaying mode, the message is displayed in full-screen and the terminal is maintained in lock screen status, at this time the terminal may not response to the touch operation such as click, slide UDRL (up, down, right, left) and the like for the message by other users anymore. Thus other users cannot view the other messages from the same message session, so that it may reduce the risk of privacy disclosure.

Referring to Fig.4, after showing the message to other users is done, the user may long-press the message, and perform the two-finger-inward-sliding operation with another hand for the message when long-pressing it, to switch the message to default displaying mode, the message is exited from full-screen displaying and the terminal is deactivated from the lock screen status. After deactivating the lock screen status, the terminal may response to the touch operation such as click, slide UDRL (up, down, right, left) and the like for the message by user regularly.

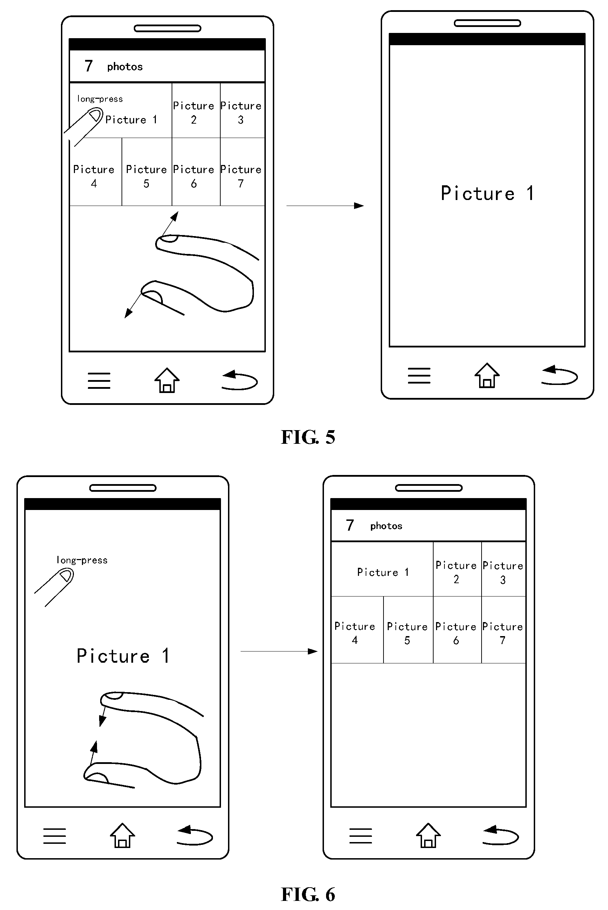

Referring to Fig.5, for another example, assuming the target object is the picture on the user terminal, the user may long-press the picture when he/she wants to show the message which on the terminal to the other users, and the user may perform the two-finger-outward-sliding operation with another hand for the picture when long-pressing it, to switch the picture to private displaying mode, the picture is displayed in full-screen and the terminal is maintained in lock screen status, at this time the terminal may not response to the touch operation such as click, slide UDRL (up, down, right, left) and the like for the picture by other users anymore. Thus other users cannot view the other pictures which are undesired to show by sliding left or right when they view the picture, so that it may reduce the risk of privacy disclosure.

Referring to Fig.6, after showing the picture to other users is done, the user may long-press the message, and perform the two-finger-inward-sliding operation with another hand for the picture when long-pressing it, to switch the picture to default displaying mode, the picture is exited from full-screen displaying and the terminal is deactivated from the lock screen status. After deactivating the lock screen status, the terminal may response to the touch operation such as click, slide UDRL (up, down, right, left) and the like for the picture by the user regularly.

In another exemplary implementation, it can pre-create a private displaying interface when the target object is switched to private displaying mode, then the target object is moved to the private displaying interface for displaying. Wherein the target object can be full-screen or zoom-in displayed by default when the target object is moved to the private displaying interface.

After the target object is moved to the private displaying interface, the terminal can still response to the touch operation for the target object by user, the user can still perform the two-finger-outward-sliding or two-finger-inward-sliding operation for the target object to do the zoom-in or zoom-out operations. Moreover, due to the private displaying interface is only used to display the target object, the user can not view the other target object except for this target object when perform the slide UDRL operations for this target object, so that it can reduce the potential risk of privacy disclosure exist during that user show the target object to other user.

After showing the target object to other users is done, the user may also select the target object by long-pressing it, the user may perform the two-finger-inward-sliding operation for any location on screen with another hand when long-pressing the target object, to trigger the switching of the target object from private displaying mode to default displaying mode.

At same time, the terminal may still detect the multi-point touch event for the target object in the background in real-time, and determine whether the detected multi-point touch event is the second multi-point touch event corresponding to the second multi-point touch operation, after the two-finger-inward-sliding event for any location on screen is detected within the time period during which the long-press event occurs, the terminal can determine the detected multi-point touch event is the second multi-point touch event corresponding to the second multi-point touch operation.

When the terminal has determined the detected multi-point touch event is the second multi-point touch event, the switching of the target object from private displaying mode to default displaying mode that may be triggered, the target object is moved out of the private interface and the private interface is closed. After the private interface is closed, the terminal can move the target object to the default location.

For example, assuming the target object is the message on the user terminal, the user may long-press the message when he/she wants to show the message which on the terminal to the other users, and the user may perform the two-finger-outward-sliding operation with another hand for the message when long-pressing it, to move the message to the pre-created private displaying interface for displaying, at this time the terminal can response to the touch operation such as click, slide UDRL (up, down, right, left) and the like for the message by other users regularly. Other users cannot view the other messages from the same message session due to the private displaying interface is only used to display the message, so that it may reduce the risk of privacy disclosure.

After showing the message to other users is done, the user may long-press the message, and perform the two-finger-inward-sliding operation with another hand for the message when long-pressing it, to switch the message to default displaying mode, the message is moved out of the private displaying interface and the private displaying interface is closed. After the private interface is closed, the terminal can move the message to the default location in message session.

For another example, assuming the target object is the picture on the user terminal, the user may long-press the picture when he/she wants to show the message which on the terminal to the other users, and the user may perform the two-finger-outward-sliding operation with another hand for the picture when long-pressing it, to move the picture to the pre-created private displaying interface for displaying, at this time the terminal can response to the touch operation such as click, slide UDRL (up, down, right, left) and the like for the message by other users regularly.. Other users cannot view the other pictures which are undesired to show by sliding left or right when they view the picture due to the private displaying interface is only used to display the picture, so that it may reduce the risk of privacy disclosure.

After showing the picture to other users is done, the user may long-press the message, and perform the two-finger-inward-sliding operation with another hand for the picture when long-pressing it, to switch the picture to default displaying mode, the picture is moved out of the private displaying interface and the private displaying interface is closed. After the private interface is closed, the terminal can move the picture to the default location in photo album.

Above describing the gesture interactive process between user and terminal in details with the selecting operation as the long-press operation, the gesture-zoom-in operation as the two-finger-outward-sliding operation and the gesture-zoom-out operation as the two-finger-inward-sliding operation for example. Certainly, the gesture-zoom-in operation can be defined as other types of gesture operation in practical applications, it will not be limited in present embodiment specially.

For example, the gesture-zoom-in operation may also be the slide operation in any first direction for screen or double click for any location on screen when user select the target object by long-pressing it, that is the user can switch the target object to the private displaying mode by sliding in any first direction for screen or double click the target object when user select the target object by long-pressing it; the gesture-zoom-out operation may also be the slide operation in any second direction for screen or double click for any location on screen when user select the target object by long-pressing it, that is after the target object is switched to the private displaying mode, the user can switch the target object from the private displaying mode to default displaying mode by sliding in any second direction for screen or double click the target object. Wherein the first direction and the second direction corresponding to the deferent directions for the screen respectively; for example, the first direction towards left and the second direction towards right.

In above embodiments, with detecting multi-point touch event for a target object, and determining whether the detected multi-point touch event is a first multi-point touch event that is predetermined, wherein the first multi-point touch event is used to trigger switching of the target object to a private displaying mode, switching the target object to private displaying mode if the detected multi-point touch event is the first multi-point touch event, to display only the target object in the private displaying mode , so that the user can implement the switching of the target object to the private displaying mode quickly by simple multi-point touch operations, reducing the potential risk of privacy disclosure exist in usage scenario where user show the target object to other user.

Also, using the multi-point operation to trigger the switching of the target object to the private displaying mode may not only simple to operate but also can avoid the problems of semantic conflict may occur when trigger the switching of the target object to the private displaying mode by conventional single-point operation. For example, the conventional single-point operations such as click, double-click, long-press operation and the like are generally defined with particular semantics in terminal system, thus there may be semantic conflicts with the existing semantics in terminal system when trigger the switching of the target object to the private displaying mode by conventional single-point operation.

Corresponding to the method for displaying the target object, a device for displaying target object is provided.

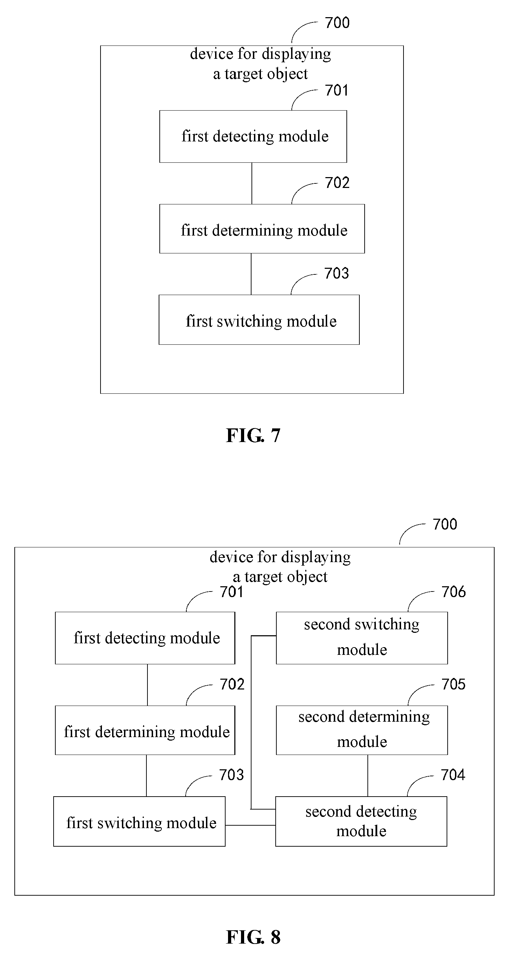

Fig. 7 is a block diagram illustrating a device for displaying the target object according to an exemplary embodiment.

As shown in Fig. 7, illustrating a device 700 for displaying a target object according to an exemplary embodiment including: a first detecting module 701, a first determining module 702, and a first switching module 703; wherein:
The first detecting module 701 configured to detect multi-point touch event for the target object;
The first determining module 702 configured to determine whether the multi-point touch event detected by the first detecting module is a first multi-point touch event that is predetermined, wherein the first multi-point touch event is used to trigger switching of the target object to a private displaying mode;
The first switching module 703 configured to switch the target object to the private displaying mode if the first determining module determines that the detected multi-point touch event is the first multi-point touch event, such that only the target object is displayed in the private displaying mode.

In above embodiments, with detecting multi-point touch event for a target object, and determining whether the detected multi-point touch event is a first multi-point touch event that is predetermined, wherein the first multi-point touch event is used to trigger switching of the target object to a private displaying mode, switching the target object to private displaying mode if the detected multi-point touch event is the first multi-point touch event, to display only the target object in the private displaying mode , so that the user can implement the switching of the target object to the private displaying mode quickly by simple multi-point touch operations, reducing the potential risk of privacy disclosure exist in usage scenario where user show the target object to other user.

Referring to Fig.8, Fig. 8 is a block diagram illustrating anther device according to an exemplary embodiment, this embodiment is based on the embodiment illustrated in Fig. 7, the device 700 may further include a second detecting module 704, a second determining module 705 and a second switching module 706; wherein:
The second detecting module 704 configured to detect the multi-point touch event for the target object after the first switching module 703 switches the target object to private displaying mode;
The second determining module 705 configured to determine whether the multi-point touch event detected by the second detecting module 704 is a second multi-point touch event that is predetermined, wherein the second multi-point touch event is used to trigger restoring of the target object from the private displaying mode to a default displaying mode;
The second switching module 706 configured to switch the target object from private displaying mode to default displaying mode if the second determining module 704 determines that the detected multi-point touch event is the second multi-point touch event.

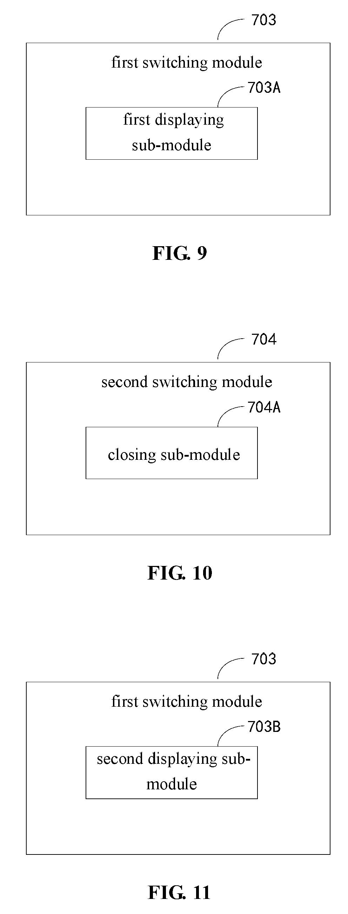

Referring to Fig.9, Fig. 9 is a block diagram illustrating anther device according to an exemplary embodiment, this embodiment is based on the embodiment illustrated in Fig. 7, the first switching module 703 may include a first displaying sub-module 703A; wherein:
The first displaying sub-module 703A configured to move the target object to predetermined private displaying interface for displaying.

It should be note that the structure of the first displaying sub-module 703A illustrated in device embodiment of Fig.9 may also be comprised in device embodiment of Fig.8, the present disclosure will not limit for this.

Referring to Fig.10, Fig. 10 is a block diagram illustrating anther device according to an exemplary embodiment, this embodiment is based on the embodiment illustrated in Fig. 8, the second switching module 704 may include a closing sub-module 704A; wherein:
The closing module 704A configured to move the target object out of the predetermined private displaying interface and close the predetermined private displaying interface.

It should be note that the structure of the closing module 704A illustrated in device embodiment of Fig.10 may also be comprised in device embodiment of Fig.7 or Fig.9, the present disclosure will not limit for this.

Referring to Fig.11, Fig. 11 is a block diagram illustrating anther device according to an exemplary embodiment, this embodiment is based on the embodiment illustrated in Fig. 7, the first switching module 703 may include a second displaying sub-module 703B; wherein:
The second displaying sub-module configured to display the target object in full-screen and maintain a lock-screen status.

It should be note that the structure of the second displaying sub-module 703B illustrated in device embodiment of Fig.11 may also be comprised in device embodiment of Fig.8-10, the present disclosure will not limit for this.

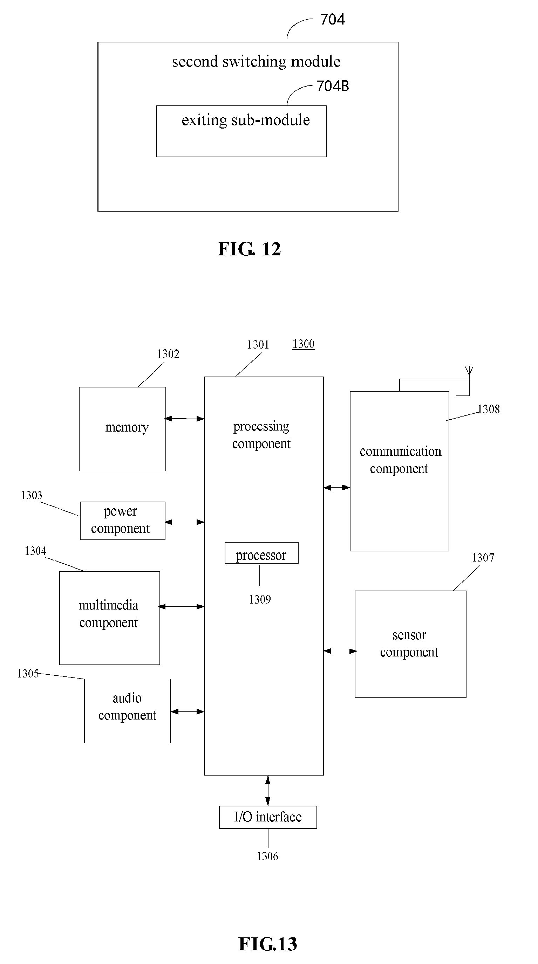

Referring to Fig.12, Fig. 12 is a block diagram illustrating anther device according to an exemplary embodiment, this embodiment is based on the embodiment illustrated in Fig. 8, the second switching module 704 may include an exiting sub-module 704B; wherein:
The exiting sub-module 704B configured to enable the target object to exit from full-screen displaying and deactivating the lock screen status.

It should be note that the structure of the exiting sub-module 704B illustrated in device embodiment of Fig.12 may also be comprised in device embodiment of Fig.7 or Fig.9-11, the present disclosure will not limit for this.

In above embodiments, the first multi-point touch event detected by the first detecting module 701 includes a first selecting event and a gesture-zoom-in event for the target object, and a time period during which the first selecting event occurs contains a time period of during which the gesture-zoom-in event occurs.

The second multi-point touch event detected by the second detecting module 704 includes a second selecting event and a gesture-zoom-out event for the target object, and a time period during which the second selecting event occurs contains a time period during which the gesture-zoom-out event occurs.

The first selecting event detected by the first detecting module 701 and the second selecting event detected by the second detecting module 704 both include long-press event; the gesture-zoom-in event detected by the first detecting module 701 includes a two-finger-outward-sliding event for any location on screen; the gesture-zoom-out event detected by the second detecting module 704 includes a two-finger-inward-sliding event for any location on screen.

The target object for which the first detecting module 701 and the second detecting module 704 have detected includes image object or text object.

With respect to the devices in the above embodiments, the specific manners for performing operations for individual modules therein have been described in detail in the embodiments regarding the methods, which will not be elaborated herein.

For the device embodiments mainly corresponding to the method embodiments, something related has been described in the partial illustrating of method embodiments. The device embodiment described above are exemplary only, wherein the modules described as separate components may or may not separate in physically, the components illustrated as modules may be or not physical modules, that is, the components may be located in same place or may be distributed on multiple network modules. Selecting parts of or all of modules to implement the present disclosure as necessary. It will be understood and practiced by ordinary skilled in the art without inventiveness effort.

Accordingly, a device for displaying a target object is provided in the present disclosure, including: a processor; a memory for storing the instructions executable by the processor; wherein the processor is configured to: detect multi-point touch event for the target object; determine whether the detected multi-point touch event is a first multi-point touch event that is predetermined, wherein the first multi-point touch event is used to trigger switching of the target object to a private displaying mode; if the detected multi-point touch event is the first multi-point touch event, switching the target object to the private displaying mode, such that only the target object is displayed in the private displaying mode.

Accordingly, a terminal is provided in the present disclosure, including: a memory, and one or more programs executable by one or more processors which are stored in the memory, the one or more programs include the instructions for: detecting multi-point touch event for a target object; determining whether the detected multi-point touch event is a first multi-point touch event that is predetermined, wherein the first multi-point touch event is used to trigger switching of the target object to a private displaying mode; if the detected multi-point touch event is the first multi-point touch event, switching the target object to the private displaying mode, such that only the target object is displayed in the private displaying mode.

Fig. 13 is a structure diagram illustrating a device for displaying the target object according to an exemplary embodiment.

As shown in Fig. 13, illustrating a device 1300 for displaying the target object according to an exemplary embodiment, the device 1300 may be a mobile phone, a computer, a digital broadcast terminal, a messaging device, a gaming console, a tablet, a medical device, exercise equipment, a personal digital assistant, and the like.

Referring to Fig. 13, the device 1300 may include one or more of the following components: a processing component 1301, a memory 1302, a power component 1303, a multimedia component 1304, an audio component 1305, an input/output (I/O) interface 1306, a sensor component 1307, and a communication component 1308.

The processing component 1301 typically controls overall operations of the device 1300, such as the operations associated with display, telephone calls, data communications, camera operations, and recording operations. The processing component 1301 may include one or more processors 1309 to execute instructions to perform all or part of the steps in the above described methods. Moreover, the processing component 1301 may include one or more modules which facilitate the interaction between the processing component 1301 and other components. For instance, the processing component 1301 may include a multimedia module to facilitate the interaction between the multimedia component 808 and the processing component 1301.

The memory 1302 is configured to store various types of data to support the operation of the device 1300. Examples of such data include instructions for any applications or methods operated on the device 1300, contact data, phonebook data, messages, pictures, video, etc. The memory 1302 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1303 provides power to various components of the device 1303. The power component 1303 may include a power management system, one or more power sources, and any other components associated with the generation, management, and distribution of power for the device 1300.

The multimedia component 1304 includes a screen providing an output interface between the device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1304 includes a front camera and/or a rear camera. The front camera and the rear camera may receive an external multimedia datum while the device 1300 is in an operation mode, such as a photographing mode or a video mode. Each of the front camera and the rear camera may be a fixed optical lens system or have optical focusing and zooming capability.

The audio component 1305 is configured to output and/or input audio signals. For example, the audio component 1305 includes a microphone ("MIC") configured to receive an external audio signal when the device 1300 is in an operation mode, such as a call mode, a recording mode, and a voice recognition mode. The received audio signal may be further stored in the memory 1302 or transmitted via the communication component 1308. In some embodiments, the audio component 1305 further includes a speaker to output audio signals.

The I/O interface 1302 provides an interface between the processing component 1301and peripheral interface modules, the peripheral interface modules being, for example, a keyboard, a click wheel, buttons, and the like. The buttons may include, but are not limited to, a home button, a volume button, a starting button, and a locking button.

The sensor component 1307 includes one or more sensors to provide status assessments of various aspects of the device 1300. For instance, the sensor component 1307 may detect an open/closed status of the device 1300, relative positioning of components (e.g., the display and the keypad, of the device 1300), a change in position of the device 1300 or a component of the device 1300, a presence or absence of user contact with the device 1300, an orientation or an acceleration/deceleration of the device 1300, and a change in temperature of the device 1300. The sensor component 1307 may include a proximity sensor configured to detect the presence of a nearby object without any physical contact. The sensor component 1307 may also include a light sensor, such as a CMOS or CCD image sensor, for use in imaging applications. In some embodiments, the sensor component 1307 may also include an accelerometer sensor, a gyroscope sensor, a magnetic sensor, a pressure sensor, or a temperature sensor.

The communication component 1308 is configured to facilitate communication, wired or wirelessly, between the device 1300 and other devices. The device 1300 can access a wireless network based on a communication standard, such as WiFi, 2G, or 3G, or a combination thereof. In an exemplary embodiment, the communication component 1308 receives a broadcast signal or broadcast associated information from an external broadcast management system via a broadcast channel. In an exemplary embodiment, the communication component 1308 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 1302 in the device 1300, for performing the above-described methods. For example, the non-transitory computer-readable storage medium may be a ROM, a RAM, a CD-ROM, a magnetic tape, a floppy disc, an optical data storage device, and the like.

Wherein, when the instructions in the memory medium executed by the processor of the mobile terminal, the mobile terminal enable to perform a method for displaying a the target object, including: detecting multi-point touch event for the target object; determining whether the detected multi-point touch event is a first multi-point touch event that is predetermined, wherein the first multi-point touch event is used to trigger switching of the target object to a private displaying mode; if the detected multi-point touch event is the first multi-point touch event, switching the target object to the private displaying mode, such that only the target object is displayed in the private displaying mode.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for displaying a target object, comprising:
detecting (101) a multi-point touch event for the target object;
determining (102) whether the detected multi-point touch event is a first multi-point touch event that is predetermined, wherein the first multi-point touch event is used to trigger switching of the target object to a private displaying mode;
if the detected multi-point touch event is the first multi-point touch event, switching (103) the target object to the private displaying mode, such that only the target object is displayed in the private displaying mode.

2. The method of claim 1, after switching (103) the target object to the private displaying mode, the method further comprising:
detecting the multi-point touch event for the target object;
determining whether the detected multi-point touch event is a second multi-point touch event that is predetermined, wherein the second multi-point touch event is used to trigger restoring of the target object from the private displaying mode to a default displaying mode;
if the detected multi-point touch event is the second multi-point touch event, switching the target object from the private displaying mode to the default displaying mode.

3. The method of claim 2, wherein the processing of switching (103) the target object to the private displaying mode comprises:
moving the target object to a predetermined private displaying interface for displaying;
the processing of switching the target object from the private displaying mode to the default displaying mode comprises:
moving the target object out of the predetermined private displaying interface and closing the predetermined private displaying interface.

4. The method of claim 2 or 3, wherein the processing of switching (103) the target object to the private displaying mode comprises:
displaying the target object in full-screen and maintaining a lock-screen status;
wherein the processing of switching the target object from the private displaying mode to the default displaying mode comprises:
enabling the target object to exit from the full-screen displaying and deactivating the lock-screen status.

5. The method of claim 2, 3 or 4, wherein the first multi-point touch event comprises a first selecting event and a gesture-zoom-in event for the target object, and a time period during which the first selecting event occurs contains a time period during which the gesture-zoom-in event occurs;
the second multi-point touch event comprises a second selecting event and a gesture-zoom-out event for the target object, and a time period during which the second selecting event occurs contains a time period during which the gesture-zoom-out event occurs.

6. The method of claim 5, wherein both the first selecting event and the second selecting event comprise a long-press event; the gesture-zoom-in event comprises a two-finger-outward-sliding event for any location on a screen; the gesture-zoom-out event comprises a two-finger-inward-sliding event for any location on the screen.

7. The method of any on of the preceding claims, wherein the target object comprises an image object or a text object.

8. A device for displaying a target object, comprising:
a first detecting module (701) configured to detect a multi-point touch event for the target object;
a first determining module (702) configured to determine whether the multi-point touch event detected by the first detecting module (701) is a first multi-point touch event that is predetermined, wherein the first multi-point touch event is used to trigger switching of the target object to a private displaying mode;
a first switching module (703) configured to switch the target object to the private displaying mode if the first determining module determines that the detected multi-point touch event is the first multi-point touch event, such that only the target object is displayed in the private displaying mode.

9. The device of claim 8, further comprising:
a second detecting module (704) configured to detect the multi-point touch event for the target object after the first switching module switches the target object to the private displaying mode;
a second determining module (705) configured to determine whether the multi-point touch event detected by the second detecting module (704) is a second multi-point touch event that is predetermined, wherein the second multi-point touch event is used to trigger restoring of the target object from the private displaying mode to a default displaying mode;
a second switching module (706) configured to switch the target object from the private displaying mode to the default displaying mode if the second determining module (705) determines that the detected multi-point touch event is the second multi-point touch event.

10. The device of claim 9, wherein the first switching module (703) comprises:
a first displaying sub-module (703A) configured to move the target object to a predetermined private displaying interface for displaying;
and wherein the second switching module comprises:
a closing sub-module (704A) configured to move the target object out of the predetermined private displaying interface and close the predetermined private displaying interface.

11. The device of claim 9 or 10, wherein the first switching module (703) comprises:
a second displaying sub-module (703B) configured to display the target object in full-screen and maintain a lock-screen status;
and wherein the second switching module comprises:
an exiting sub-module (704B) configured to enable the target object to exit from the full-screen displaying and deactivate the lock-screen status.

12. The device of claim 9, 10 or 11, wherein
the first multi-point touch event detected by the first detecting module (701) comprises a first selecting event and a gesture-zoom-in event for the target object, and a time period during which the first selecting event occurs contains a time period during which the gesture-zoom-in event occurs;
the second multi-point touch event detected by the second detecting module (704) comprises a second selecting event and a gesture-zoom-out event for the target object, and a time period during which the second selecting event occurs contains a time period during which the gesture-zoom-out event occurs.

13. The device of claim 12, wherein
both the first selecting event detected by the first detecting module (701) and the second selecting event detected by the second detecting module (704) comprise a long-press event; the gesture-zoom-in event detected by the first detecting module (701) comprises a two-finger-outward-sliding event for any location on a screen; the gesture-zoom-out event detected by the second detecting module (704) comprises a two-finger-inward-sliding event for any location on the screen.

14. A computer program including instructions for executing the steps of a method for displaying a target object according to any one of claims 1 to 7 when said program is executed by a computer.

15. A non-transitory computer-readable storage medium having stored therein instructions that, when executed by a processor, causes the processor to perform a method for displaying a target object according to any one of claims 1 to 7.
